# EUROPEAN PATENT SPECIFICATION

(11) **EP 0 923 013 B1**
(45) Date of publication and mention of the grant of the patent: **09.02.2005**
(21) Application number: 98203927.3
(22) Date of filing: 20.11.1998
(51) Int. Cl.: G05D 23/02

(54) **Thermostat head for a valve**
Thermostatventilkopf
Tête de robinet thermostatique

(30) Priority: 10.12.1997 DE 19754837
(43) Date of publication of application: 16.06.1999
(73) Proprietor: Danfoss A/S, 6430 Nordborg (DK)
(72) Inventor: Markvart, Arne, 8600 Silkeborg (DK); Frederiksen, Bjarne, 8600 Silkeborg (DK)
(74) Representative: Knoblauch, Andreas, Dr.-Ing.

(56) References cited:
- DE-A- 3 148 268
- DE-A- 4 309 121
- PATENT ABSTRACTS OF JAPAN vol. 18, no. 426 (P-1784), 9 August 1994 & JP 06 131057 A (FUJI SEIKO KK), 13 May 1994
- PATENT ABSTRACTS OF JAPAN vol. 16, no. 578 (M-1346), 17 December 1992 & JP 04 228988 A (MATSUSHITA ELECTRIC IND CO), 18 August 1992

## Description

The invention concerns a thermostat head according to the preamble of claim 1.

Such a thermostat head is known from DE 43 09 121 A1. This thermostat head has the option of adjusting the handle manually or by means of motor inserted in the thermostat head. However, this is not a construction fit for the market, as the motor arranged in extension of the series connection of thermostatic element and desired value setting device leads to a very large height of the thermostat head.

A thermostat head for a valve, said thermostat head being provided with a handle-free housing, with a regulating unit, which, on operation of an electrical activator, adjusts a contact surface controlling the valve and with a desired value input device operable by means of a signal generator is known from US-A 5 137 051. To enter a desired value or a desired value programme to cover a long period, a control panel with a keyboard and a display is arranged on the front side of a square housing. An electric circuit having a microprocessor compares the entered desired value with the measured room temperature and adjusts the motor provided with a feedback potentiometer by a distance corresponding to the control deviation, the contact surface facing the valve being adjusted accordingly. The entering of a desired value via a control panel is substantially less difficult and requires less force than the adjustment of a handle as existing on the commonly known radiator thermostat heads, a feature which is particularly welcomed by elderly users. As, however, the motor has to be started on each of the frequent control operations, a substantial power consumption occurs, so that the life of the batteries arranged in the housing is short, or a connection to the domestic power supply mains is required.

As a contrast to this are the widely known thermostat heads with a thermostatic element adjusting in dependence of the temperature to be controlled, serving itself as temperature sensor or being connected with a remote sensor via a capillary tube, and with a mechanical desired value setting arrangement, which is adjusted axially by turning a handle. Such thermostatic systems comprise a fluid-steam filling and a desired value spring counteracting the steam pressure, or a fluid or solid filling. These thermostat heads work completely autonomously, but each desired value change requires an adjustment of the handle.

Further, a thermostat head with handle is known from DE 31 35 895 A1, in which an extendible adapter is arranged between the desired value setting device and the contact surface, said adapter being a randomly heatable expansion body or a cam disc rotatable by a motor via a gear.

From DE 31 27 184 C2 is known an autonomous thermostat head with a rotatable thermostat housing for desired temperature value setting, the night setback of which is performed by means of an integrated steering and driving unit, which only requires energy during the adjusting operation. The rechargeable batteries used for this are supplied from solar cells arranged on the thermostat head. The embodiment of the steering and driving unit is not described.

DE 31 48 268 A1 shows a radiator valve which can be controlled by means of two thermostat heads. A selection means controlled by a motor couples operatively one of the two thermostat heads to the valve.

JP 06 131 057 A shows an electric mixing valve for hot and cold water. This valve has a thermo-sensitive stretching device arranged in a mixing chamber. This stretching device is operatively coupled with a valve element co-operating with a cold water valve seat. The position of the stretching device is controlled by a motor acting upon the stretching device via a reduction gear.

JP 04 228 988 A shows a hot and cold water mixing device of a similar construction. A wax thermostat is arranged in a mixing chamber. The wax thermostat acts upon a valve body which controls the relation of cold water flow and hot water flow. The position of the wax thermostat is controlled by a motor via a reduction gear. The invention is based on the task of providing a thermostat head which need not to be substantially larger than a thermostat head with handle.

According to the invention, this task is solved by the features of the characterising part of claim 1.

In this construction all advantages of a desired value setting without handle (convenient desired value entering, opportunity of programming, no mechanical power requirement) are maintained. However, the activator is not started for each control operation, but only adjusted in connection with a desired value change. The power consumption is accordingly low, and in the cases, where batteries are used, this leads to a longer life of the batteries. Between the adjusting operations the thermostatic element works automatically and without power consumption. In this connection it is particularly noticeable that due to the dispension of the handle the housing can have any desired cross section deviating from the circular shape, thus making no difficulties in view of the room saving arrangement of the activator, the transfer elements and any batteries, as even a small bulge on the housing will be sufficient to accommodate these parts. Thus, the new thermostat head need not be substantially larger than a thermostat head with handle.

Preferably, it is provided that the thermostatic element has a fluid or solid filling and that the regulating unit is arranged in series with the thermostatic element and changes its length on operation of the activator. The desired value is changed by a simple longitudinal adjustment of the regulating unit.

In particular, this can occur in that the axial length of the thermostatic element changes in dependence of the temperature to be controlled, that the axial length of the regulating unit changes on operation of the activator and that the regulating unit is arranged mechanically in series between a supporting surface of the housing and the contact surface.

An additional recommendable alternative provides that the thermostatic element has a fluid-steam filling and acts against a spring and that the regulating unit fits to one of the spring counter flanges and changes its length on operation of the activator. Thus, the position of the contact surface is on the one hand fixed by the balance between the spring force and the force of the steam pressure and on the other hand adjustable by means of the regulating unit.

Preferably, the regulation unit lies next to the contact surface. Here one end of the thermostatic element and/or the spring can have a fixed bearing on the housing.

In most cases the thermostat head is used so that the valve opens more when the temperature to be controlled drops, as is the case with valves for radiators, underfloor heating, water heaters etc. However, the thermostat head is also suited for valves opening on temperature increases, for example refrigeration valves. This is done most simply in that in the housing a reversing device is allocated to the thermostatic element, which device reverses the operational direction of the thermostatic element with reference to the contact surface.

It is advantageous that the regulating unit comprises two mutually screwable parts, of which one is unrotatable and the other one is rotatable by means of the activator. The transforming of the rotational movement into the axial adjustment provides favourable transformation ratios, so that a small motor can be used.

With regard to the construction it is recommendable that the activator is arranged at the side of the thermostatic element and/or the regulating unit, and that for the purpose of accommodating the activator the housing has a shape which deviates from the circular cross section. This gives a compact housing construction, in which no axial height is required for the motor.

In this connection it is advantageous that the longitudinal axis of the activator is parallel to the axis of the thermostatic element and the regulating unit. This gives the dimensionally most compact solution.

In a preferred embodiment it is provided that the rotatable part of the regulating unit has a toothed wheel with circumferential toothing, with which a pinion driven by the activator meshes. As the activator practically acts direct upon the regulating unit, an inexpensive and compact construction occurs.

It is also preferred that the diameter of the toothed wheel is larger than that of the thermostatic element and that the diameter of the pinion is smaller than that of the toothed wheel. Thus, a large transformation ratio is obtained, which again enables the use of smaller motors.

Additionally, it is advantageous that at least one battery is also arranged in the housing. The thermostat head is thus autonomous, apart from battery changes required at long time intervals. The arrangement of a battery in the housing involves no difficulties, as the housing shape can be selected accordingly.

It is particularly provided that the battery is arranged at the side of the thermostatic element and/or the regulating unit near the activator. This gives a compact construction.

It is also recommendable that a filling monitor emitting an error signal when the filling falls below a limit value is allocated to the battery. The filling monitor can for example be a voltmeter. The error signal can trigger an optical or acoustic error notice.

It is particularly recommendable that on occurrence of an error signal from the activator the regulating unit is adjustable to a pre-set resting position. In connection with living-rooms this resting position may for example correspond to a desired value of 20°C, in connection with antifreeze the desired value may be 5°C. The desired values set in this way will also be maintained when the batteries are discharged.

Preferably, the activator is a motor, particularly a stepping motor. However, also other activators can be imagined, for example magnetic systems with notches.

It is also advantageous that a control circuit is provided, which, on entering a new desired value, compares this with the desired value setting and drives the activator by a measure corresponding to the difference. A control circuit of this kind can also be arranged inside the housing.

In a further embodiment of the invention it is possible that the signal generator has a keyboard and/or a display. It can also be arranged on the housing and/or be part of a remote control.

In the following the invention is described on the basis of preferred embodiments in connection with the drawings, showing:
- Fig. 1: a schematic view of a first embodiment of a thermostat head for a heating valve in accordance with the invention
- Fig. 2: a modified embodiment for a refrigeration valve

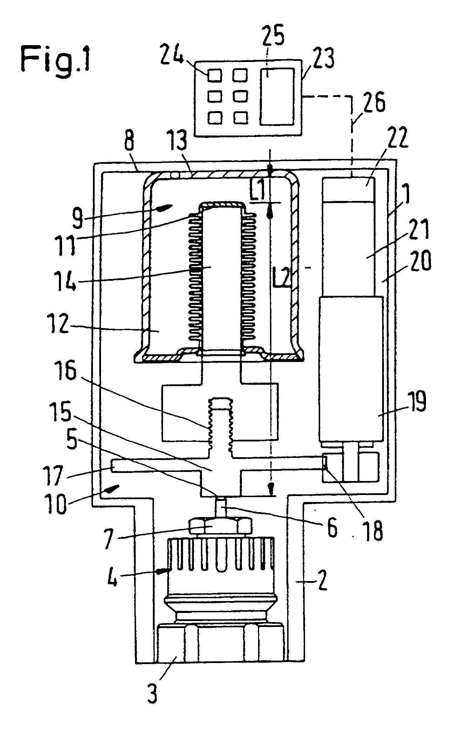

The thermostat head in Fig. 1 has a housing 1, which is fixed on the top part 3 of a radiator valve 4 by means of a socket 2. The housing 1 is shown to be a single part, in practice, however, it comprises several parts connected with each other. The valve 4 is activated in that an axially adjustable contact surface 5 acts upon a valve tappet 6, which is lead to the outside through a stuffing box 7.

Between a supporting surface 8 of the housing 1 and the contact surface 5 a thermostatic element 9 and a regulating unit 10 are arranged, which are connected with each other via a coupling surface 11. The thermostatic element 9 has a solid filling 12 and is at the same time actual value sensor. The front wall 13 of the thermostatic element 9 bears direct on the supporting surface 8 of the housing. The axial length L1 of the thermostatic element 9 changes in dependence of the actual value of the room temperature. The axial length L2 of the regulating unit 10 changes in dependence of the setting of the desired value.

The regulating unit 10 comprises an unrotatable part 14 and a rotatable part 15, which are connected with each other via a screw thread 16. The rotatable part 15 carries a gear wheel 17, which is drivable by means of an electric motor 19, for example a stepping motor, via a pinion 18. The motor 19 is arranged in a bulge 20 on the housing 1, which also accommodates batteries 21 for driving the motor 19 and a control circuit 22. For this purpose the axes of the motor 19 and the batteries 10 are parallel to the axes of the thermostatic element 9 and the regulating unit 10. The gear wheel 17 has a very large diameter, which exceeds the diameter of the thermostatic element 9. Compared with the gear wheel diameter the pinion 18 has a small diameter.

A control circuit 22 arranged inside the housing 1 has a desired value input device, which co-operates with a signal generator 23 and has, for example, a keyboard 24 and a display 25. The signal generator 23 is designed as a remote control, so that the signal generation to the control circuit 22 occurs wirelessly or via a cable connection 26. By means of this signal generator 23 the desired value or a desired value programme meant for a longer period (day, week, year) is supplied to a memory in the control circuit 22. Then each change of the desired value will cause the control circuit 22, which also comprises a timer, to drive the motor 19 by a measure corresponding to the change. The change of the length L2 caused by this specifies the new desired value for the thermostat head.

Further, the control circuit 22 comprises a filling monitor, which monitors the charging state of the batteries 21, for example by means of a voltage measuring. When the filling comes below a limit value, an error signal is generated, which on the one hand triggers an optical signal in the display 25, and if required also an acoustic signal elsewhere, and also provides that the regulating unit 10 is turned to a predetermined resting position, for example to a desired value position of a 20°C room temperature.

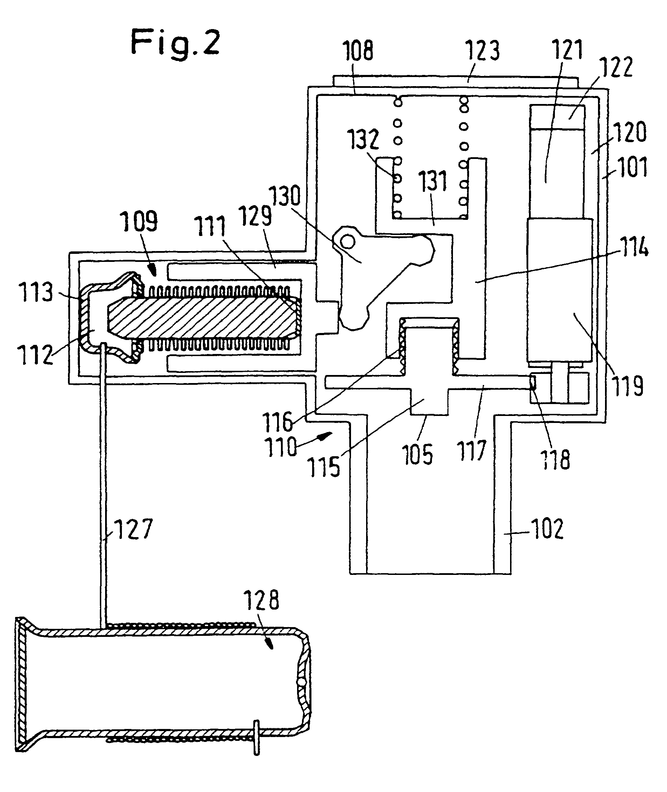

In Fig. 2, in which a thermostat head for a refrigeration valve is shown schematically, reference signs increased by 100 in relation to Fig. 1 are used for corresponding parts. Initially, a difference is that the thermostatic element 109 contains a fluid-steam filling an is connected with a remote sensor 128 via a capillary tube 127. Thus, via an intermediate link 129 the thermostatic element 109 acts upon a reversing device 130 in the form of an angled lever, whose second arm is loaded by the counter flange 131 of a spring 132. For this reason the unrotatable part 114 of the regulating unit 110 assumes a position depending on the steam pressure in the thermostatic element 109 and the power of a spring 132 counteracting this steam pressure. This leads to a reversal of the operational direction of the thermostatic element 109 with regard to the contact surface 105. A motor-driven adjustment of the gear wheel 117 will change the length of the regulating unit 110 and thus also the desired value. In this embodiment the signal generator 123 is arranged at the front side of the housing 101.

The embodiment of Fig. 2 can also be operated with a fluid filling. Then the spring 132 is to be constructed as a security spring, that is, with a relatively large rigidity. A security spring of this kind is also provided in the embodiment according to Fig. 1, however, for reasons of a simpler view, it is not shown.

When the thermostat heads according to the invention are used for heating valves (room heating or underfloor heating), the desired value can be entered manually via an operating panel. A time dependent night setback can be provided, which again can be overridden if wanted, for example, when guests are expected. A complete desired value programme for a whole week can be set. In connection with the heating of a hot water tank a night setback of the water temperature can give large savings. Also in connection with refrigeration valves it is often favourable to adapt the desired value to the requirements. In connection with an underfloor heating it may be suitable to arrange a remote sensor on a hot water tube to provide a control of the room temperature on the basis of the flow temperature of the water. It is also important that the thermostat heads can be adjusted via a remote control, preferably a whole group of such thermostat heads can even be adjusted from a common central unit. The remote-controlled thermostat heads no longer have to be accessible for the desired value setting. Thus they can be arranged anywhere in a building, even in the basement.

Advantageously, the batteries are arranged in the housing. However, they can also be placed in a remote control unit or, in connection with radiators, in a housing behind the radiator. Expediently, the batteries are rechargeable, particularly via a remote control unit.

The regulating unit must not necessarily consist of two mutually screwable parts, but can also be made as a profiled disc, the activator pushing sections with differing thicknesses between the contact surface and the thermostatic element. In stead of the toothed gearing shown, a different transmission can be used, for example, a belt drive etc. Further, the gear wheel 17 can be replaced by a worm wheel and the pinion 18 by a worm, the axis of the motor 19, 119 then expediently extending transversal to the axes of the thermostatic element 9 and the regulating unit 10.

## Claims

1. Thermostat head for a radiator or refrigeration valve (4), said thermostat head being provided with a housing (1; 101), in which is arranged a thermostatic element (9; 109) with associated desired value setting device, the element being adjustable in dependence of the temperature to be controlled, and with a regulating unit (10; 110), which, on operation of an electrical activator (19; 119), adjusts a contact surface (5; 105) controlling the valve (4), the desired value setting device being formed by the regulating unit (10; 110), which is adjustable over the whole desired value area through the activator (19;119), **characterised in that** the housing (1; 101) is handle-free and **in that** a desired value input device operable by means of a signal generator (23) is provided.

2. Thermostat head according to claim 1, **characterised in that** the thermostatic element (9) has a fluid or solid filling and that the regulating unit (10) is arranged in series with the thermostatic element and changes its length on operation of the activator (19).

3. Thermostat head according to claim 1 or 2, **characterised in that** the axial length (L1) of the thermostatic element (9) changes in dependence of the temperature to be controlled, that the axial length of the regulating unit (10) changes on operation of the activator (19) and that the regulating unit (10) is arranged mechanically in series between a supporting surface (8) of the housing (1) and the contact surface (5).

4. Thermostat head according to claim 1, **characterised in that** the thermostatic element (109) has a fluid-steam filling and acts against a spring (132) and that the regulating unit fits to one of the spring counter flanges (131) and changes its length on operation of the activator (119).

5. Thermostat head according to one of the claims 1 to 4, **characterised in that** the regulation unit (10; 110) lies next to the contact surface (5; 105).

6. Thermostat head according to one of the claims 1 to 5, **characterised in that** in the housing a reversing device (130) is allocated to the thermostatic element (109), which device reverses the operational direction of the thermostatic element with reference to the contact surface (105).

7. Thermostat head according to one of the claims 1 to 6, **characterised in that** the regulating unit (10;110) comprises two mutually screwable parts, of which one (14; 114) is unrotatable and the other one (15; 115) is rotatable by means of the activator (19; 119).

8. Thermostat head according to one of the claims 1 to 7, **characterised in that** the activator (19;119) is arranged at the side of the thermostatic element (9; 109) and/or the regulating unit (10; 110), and that for the purpose of accommodating the activator (19; 119) the housing (1; 101) has a shape which deviates from the circular cross section.

9. Thermostat head according to claim 8, **characterised in that** the longitudinal axis of the activator (19) is parallel to the axis of the thermostatic element (9) and the regulating unit (10).

10. Thermostat head according to claim 7 , **characterised in that** the rotatable part (15; 115) of the regulating unit (10; 110) has a toothed wheel (17; 117) with circumferential toothing, with which a pinion (18; 118) driven by the activator (19; 119) meshes.

11. Thermostat head according to claim 10, **characterised in that** the diameter of the toothed wheel (17; 117) is larger than that of the thermostatic element (9; 109) and that the diameter of the pinion (18; 118) is smaller than that of the toothed wheel (17; 117).

12. Thermostat head according to one of the claims 1 to 11, **characterised in that** at least one battery (21; 121) is also arranged in the housing (1; 101).

13. Thermostat head according to claims 8 and 12, **characterised in that** the battery (21; 121) is arranged at the side of the thermostatic element (9; 109) and/or the regulating unit (10; 110) near the activator (19; 119).

14. Thermostat head according to claim 12 or 13, **characterised in that** a filling monitor emitting an error signal when the filling falls below a limit value is allocated to the battery (21; 121).

15. Thermostat head according to claim 14, **characterised in that** on occurrence of an error signal from the activator (19; 119) the regulating unit (10; 110) is adjustable to a pre-set resting position.

16. Thermostat head according to one of the claims 1 to 15, **characterised in that** the activator (19; 119) is an electric motor.

17. Thermostat head according to claim 16, **characterised in that** the motor is a stepping motor.

18. Thermostat head according to one of the claims 1 to 17, **characterised in that** a control circuit (22; 122) is provided, which, on entering a new desired value, compares this with the desired value setting and drives the activator (19; 119) by a measure corresponding to the difference.

19. Thermostat head according to one of the claims 1 to 18, **characterised in that** the signal generator (23) has a keyboard (24).

20. Thermostat head according to one of the claims 1 to 19, **characterised in that** the signal generator (23) has a display (25).

21. Thermostat head according to one of the claims 1 to 20, **characterised in that** the signal generator (123) is arranged on the housing (101).

22. Thermostat head according to one of the claims 1 to 20, **characterised in that** the signal generator (23) is part of a remote control.

## Patentansprüche

1. Thermostataufsatz für ein Heizkörper- oder Kälteventil (4), der mit einem Gehäuse (1; 101) versehen ist, in dem ein Thermostatelement (9; 109) mit zugehöriger Sollwert-Einstellvorrichtung angeordnet ist, wobei das Element einstellbar ist in Abhängigkeit von der zu regelnden Temperatur, und mit einem Stellglied (10; 110), das bei Betätigung eines elektrischen Aktivators (19; 119) eine das Ventil steuernde Anlagefläche (5; 105) verstellt, wobei die Sollwert-Eingabevorrichtung durch das Stellglied (10; 110) gebildet ist, das durch den Aktivator (19; 119) über den gesamten Sollwertbereich verstellbar ist, **dadurch gekennzeichnet, daß** das Gehäuse (1; 101) drehgriff-frei ist und daß eine Sollwert-Eingabevorrichtung, die mit Hilfe eines Signalgenerators (23) betätigbar ist, vorgesehen ist.

2. Thermostataufsatz nach Anspruch 1, **dadurch gekennzeichnet, daß** das Thermostatelement (9) eine Flüssigkeits- oder Feststoff-Füllung aufweist und daß das Stellglied (10) mit dem Thermostatelement in Reihe angeordnet ist und bei Betätigung des Aktivators (19) seine Länge ändert.

3. Thermostataufsatz nach Anspruch 1 oder 2, **dadurch gekennzeichnet, daß** sich die axiale Länge (L1) des Thermostatelements (9) in Abhängigkeit von der zu regelnden Temperatur ändert, daß sich die axiale Länge (L2) des Stellgliedes (10) bei Betätigen des Aktivators (19) ändert und daß das das Stellglied (10) mechanisch zwischen einer Stützfläche (8) des Gehäuses (1) und der Anlagefläche (5) in Reihe angeordnet ist.

4. Thermostataufsatz nach Anspruch 1, **dadurch gekennzeichnet, daß** Thermostatelement (109) eine Flüssigkeits-Dampf-Füllung aufweist und gegen eine Feder (132) wirkt und daß das Stellglied an eines der Federwiderlager (131) anschließt und bei Betätigung des Aktivators (119) seine Länge ändert.

5. Thermostataufsatz nach einem der Ansprüche 1 bis 4, **dadurch gekennzeichnet, daß** das Stellglied (10; 110) der Anlagefläche (5; 105) benachbart ist.

6. Thermostataufsatz nach einem der Ansprüche 1 bis 5, **dadurch gekennzeichnet, daß** dem Thermostatelement (109) im Gehäuse eine Umkehrvorrichtung (130) zugeordnet ist, die die Wirkungsrichtung des Thermostatelements mit Bezug auf die Anlagefläche (105) umkehrt.

7. Thermostataufsatz nach einem der Ansprüche 1 bis 6, **dadurch gekennzeichnet, daß** das Stellglied (10; 110) zwei gegeneinander verschraubbare Teile aufweist, von denen das eine Teil (14; 114) drehfest und das andere Teil (15; 115) vom Aktivator (19; 119) drehbar ist.

8. Thermostataufsatz nach einem der Ansprüche 1 bis 7, **dadurch gekennzeichnet, daß** der Aktivator (19; 119) seitlich neben dem Thermostatelement (9; 119) und/oder dem Stellglied (10; 110) angeordnet ist und das Gehäuse (1; 101) zur Aufnahme des Aktivators (19; 1119) eine vom Kreisquerschnitt abweichende Form hat.

9. Thermostataufsatz nach Anspruch 8, **dadurch gekennzeichnet, daß** die Längsachse des Aktivators (19) parallel zur Achse von Thermostatelement (9) und Stellglied (10) verläuft.

10. Thermostataufsatz nach Anspruch 7, **dadurch gekennzeichnet, daß** das drehbare Teil (15; 115) des Stellgliedes (10; 110) ein Zahnrad (17; 117) mit Umfangsverzahnung aufweist, in die ein vom Aktivator (19; 119) angetriebenes Ritzel (18; 118) eingreift.

11. Thermostataufsatz nach Anspruch 10, **dadurch gekennzeichnet, daß** das Zahnrad (17; 117) einen größeren Durchmesser besitzt als das Thermostatelement (9; 109) und daß das Ritzel (18; 118) einen kleineren Durchmesser besitzt als das Zahnrad (17; 117).

12. Thermostatelement nach einem der Ansprüche 1 bis 11, **dadurch gekennzeichnet, daß** sich im Gehäuse (1; 101) auch mindestens eine Batterie (21; 121) befindet.

13. Thermostatelement nach den Ansprüchen 8 und 12, **dadurch gekennzeichnet, daß** die Batterie (21; 121) seitlich neben dem Thermostatelement (9; 109) und/oder dem Stellglied (10; 110) in der Nachbarschaft des Aktivators (19; 119) angeordnet ist.

14. Thermostatelement nach Anspruch 12 oder 13, **dadurch gekennzeichnet, daß** der Batterie (21, 121) ein Ladungswächter zugeordnet ist, der bei Unterschreitung eines Ladungsgrenzwerts ein Störungssignal abgibt.

15. Thermostatelement nach Anspruch 14, **dadurch gekennzeichnet, daß** das Stellglied (10; 110) beim Auftreten des Störungssignals vom Aktivator (19; 119) in eine vorgegebene Ruhelage verstellbar ist.

16. Thermostatelement nach einem der Ansprüche 1 bis 15, **dadurch gekennzeichnet, daß** der Aktivator (19; 119) ein elektrischer Motor ist.

17. Thermostatelement nach Anspruch 16, **dadurch gekennzeichnet, daß** der Motor ein Schrittmotor ist.

18. Thermostatelement nach einem der Ansprüche 1 bis 17, **dadurch gekennzeichnet, daß** eine Steuerschaltung (22; 122) vorgesehen ist, die bei Eingabe eines neuen Sollwerts diesen mit dem eingestellten Sollwert vergleicht und den Aktivator (19; 119) um ein der Differenz entsprechendes Maß antreibt.

19. Thermostatelement nach einem der Ansprüche 1 bis 18, **dadurch gekennzeichnet, daß** der Signalgeber (23) ein Tastenfeld (24) aufweist.

20. Thermostatelement nach einem der Ansprüche 1 bis 19, **dadurch gekennzeichnet, daß** der Signalgeber (23) ein Display (25) aufweist.

21. Thermostatelement nach einem der Ansprüche 1 bis 20, **dadurch gekennzeichnet, daß** der Signalgeber (123) am Gehäuse (101) angebracht ist.

22. Thermostatelement nach einem der Ansprüche 1 bis 20, **dadurch gekennzeichnet, daß** der Signalgeber (23) Teil einer Fernbedienung ist.

## Revendications

1. Tête thermostatique pour un robinet de radiateur ou de système de réfrigération (4), ladite tête thermostatique étant pourvu d'un boîtier (1 ; 101), dans lequel est agencé un élément thermostatique (9 ; 109) avec un dispositif associé de réglage de la valeur désiré, l'élément étant ajustable en fonction de la température à maîtriser, et avec une unité de régulation (10; 110), qui, sous l'action d'un activateur électrique (19 ; 119), ajuste une surface de contact (5 ; 105) commandant le robinet (4), le dispositif de réglage de la valeur désirée étant constitué de l'unité de régulation (10 ; 110), qui est ajustable sur toute l'étendue de valeur désirée par le biais de l'activateur (19 ; 119), **caractérisé en ce que** le boîtier (1 ; 101) est dépourvu de poignée et **en ce qu'**un dispositif d'entrée de la valeur désirée fonctionnant au moyen d'un générateur de signal (23) est adjoint.

2. Tête thermostatique selon la revendication 1, **caractérisée en ce que** l'élément thermostatique (9) possède un remplissage fluide ou solide et que l'unité de régulation (10) est agencée en série avec l'élément thermostatique et modifie sa longueur sous l'action de l'activateur (19).

3. Tête thermostatique selon la revendication 1 ou 2, **caractérisée en ce que** la longueur axiale (L1) de l'élément thermostatique (9) varie en fonction de la température à maîtriser, que la longueur axiale de l'unité de régulation (10) varie sous l'action de l'activateur (19) et que l'unité de régulation (10) est agencée mécaniquement en série entre une surface d'appui (8) du boîtier (1) et la surface de contact (5).

4. Tête thermostatique selon la revendication 1, **caractérisée en ce que** l'élément thermostatique (109) possède un remplissage de fluide-vapeur et s'oppose à la force d'un ressort (132) et que l'unité de régulation s'adapte à l'une des contre parties du ressort (131) et modifie sa longueur sous l'action de l'activateur (119).

5. Tête thermostatique selon l'une des revendications 1 à 4, **caractérisée en ce que** l'unité de régulation (10 ; 110) se trouve contre la surface de contact (5 ; 105).

6. Tête thermostatique selon l'une des revendications 1 à 5, **caractérisée en ce que**, à l'intérieur du boîtier, un dispositif d'inversion (130) est adjoint à l'élément thermostatique (109), lequel dispositif inverse la direction de fonctionnement de l'élément thermostatique par rapport à la surface de contact (105).

7. Tête thermostatique selon l'une des revendications 1 à 6, **caractérisée en ce que** l'unité de régulation (10 ; 110) comporte deux pièces mutuellement vissables, dont l'une (14 ; 114) ne peut pas tourner et l'autre (15 ; 115) peut tourner au moyen de l'activateur (19 ; 119).

8. Tête thermostatique selon l'une des revendications 1 à 7, **caractérisée en ce que** l'activateur (19 ; 119) est agencé à côté de l'élément thermostatique (9 ; 109) et/ou de l'unité de régulation (10 ; 110), et que dans le but de loger l'activateur (19 ; 119) le boîtier (1 ; 101) possède une forme qui s'écarte de la section transversale circulaire.

9. Tête thermostatique selon la revendication 8, **caractérisée en ce que** l'axe longitudinal de l'activateur (19) est parallèle à l'axe de l'élément thermostatique (9) et de l'unité de régulation (10).

10. Tête thermostatique selon la revendication 7, **caractérisée en ce que** la pièce rotative (15 ; 115) de l'unité de régulation (10; 110) est munie d'une roue dentée (17 ; 117) avec une denture circonférentielle, avec laquelle un pignon (18 ; 118) animé par l'activateur (19 ; 119) s'engrène.

11. Tête thermostatique selon la revendication 10, **caractérisée en ce que** le diamètre de la roue dentée (17 ; 117) est plus grand que celui de l'élément thermostatique (9 ; 109) et que le diamètre du pignon (18 ; 118) est plus petit que celui de la roue dentée (17 ; 117).

12. Tête thermostatique selon l'une des revendications 1 à 11, **caractérisée en ce que** au moins une pile (21 ; 121) est également agencée dans le boîtier (1 ; 101).

13. Tête thermostatique selon la revendication 8 et 12, **caractérisée en ce que** la pile (21 ; 121) est agencée à côté de l'élément thermostatique (9 ; 109) et/ou de l'unité de régulation (10 ; 110) près de l'activateur (19 ; 119).

14. Tête thermostatique selon la revendication 12 ou 13, **caractérisée en ce qu'**un contrôleur de charge émettant un signal d'erreur lorsque la charge tombe en dessous d'une valeur limite est adjoint à la pile (21 ; 121).

15. Tête thermostatique selon la revendication 14, **caractérisée en ce que** en cas de signal d'erreur provenant de l'activateur (19 ; 119) l'unité de régulation (10 ; 110) est ajustable à une position de repos préréglée.

16. Tête thermostatique selon l'une des revendications 1 à 15, **caractérisée en ce que** l'activateur (19 ; 119) est un moteur électrique.

17. Tête thermostatique selon la revendication 16, **caractérisée en ce que** le moteur est un moteur pas à pas.

18. Tête thermostatique selon l'une des revendications 1 à 17, **caractérisée en ce que** un circuit de commande (22 ; 122) est adjoint, qui, lors de l'entrée d'une nouvelle valeur désirée, compare celle-ci avec le réglage de la valeur désirée et entraîne l'activateur (19 ; 119) d'une amplitude correspondant à la différence.

19. Tête thermostatique selon l'une des revendications 1 à 18, **caractérisée en ce que** le générateur de signal (23) possède un clavier (24).

20. Tête thermostatique selon l'une des revendications 1 à 19, **caractérisée en ce que** le générateur de signal (23) possède un afficheur (25).

21. Tête thermostatique selon l'une des revendications 1 à 20, **caractérisée en ce que** le générateur de signal (123) est placé sur le boîtier (101).

22. Tête thermostatique selon l'une des revendications 1 à 20, **caractérisée en ce que** le générateur de signal (23) fait partie d'une commande à distance.
